# EUROPÄISCHE PATENTSCHRIFT

(11) **EP 0 749 521 B1**
(45) Veröffentlichungstag und Bekanntmachung des Hinweises auf die Patenterteilung: **17.09.1997**
(21) Anmeldenummer: 95912182.3
(22) Anmeldetag: 02.03.1995
(51) Int. Cl.: F01K 25/10, F02C 3/34, F02B 47/10

(54) **VERFAHREN ZUR SCHADSTOFFARMEN UMWANDLUNG FOSSILER BRENNSTOFFE IN TECHNISCHE ARBEIT**
PROCESS FOR THE LOW-POLLUTANT CONVERSION OF FOSSIL FUELS INTO POWER
PROCEDE POUR UNE TRANSFORMATION FAIBLEMENT POLLUANTE DE COMBUSTIBLES FOSSILES EN ENERGIE MOTRICE

(30) Priorität: 08.03.1994 DE 4407619
(43) Veröffentlichungstag der Anmeldung: 27.12.1996
(73) Patentinhaber: CRG Kohlenstoffrecycling Ges.mbH, 09599 Freiburg (DE)
(72) Erfinder: WOLF, Bodo, D-09599 Freiberg (DE)
(74) Vertreter: Zellentin, Wiger, Dipl.-Ing.
(86) Internationale Anmeldenummer: EP9500754
(87) Internationale Veröffentlichungsnummer: WO9524545

(56) Entgegenhaltungen:
- DE-C- 859 237
- US-A- 3 559 402
- US-A- 3 736 745
- US-A- 4 498 289

## Beschreibung

Die Erfindung betrifft ein Verfahren zur schadstoffarmen Umwandlung fossiler Brennstoffe mit Hilfe von Expansionsmaschinen wie Gas- und Dampfturbinen sowie Verbrennungsmotoren in technische Arbeit.

Die Erfindung kann angewendet werden zur Umwandlung der chemischen Enthalpie fester, flüssiger und gasförmiger Brennstoffe, z.B. gebunden an stickstoffarme Verbrennungs- oder Brenngase aus festen Brennstoffen, Müll und Biomassen, Erdgas, Heizöl, Benzin, Methanol, Flüssiggase und anderes in technische Arbeit zum Antrieb von Generatoren zur Erzeugung von Elektroenergie, Fahrzeugen und Arbeitsmaschinen.

Der Stand der Technik der Kreisprozesse und Expansionsmaschinen ist weit fortgeschritten und vielfältig. Die neuesten thermodynamischen Prozeßkombinationen der Kraftwerkstechnik sind u. a. im VDI-Bericht 1065 vom September 1993 dargestellt. Beim Stand der Technik wird immer noch in offene und geschlossene Kraftprozesse unterschieden, die mit verschiedenen Arbeitsmitteln arbeiten.

Der Vorteil der geschlossenen Kreisprozesse ist, daß diese die dem Kreisprozeß zugeführte Enthalpie bis zum Niveau der Umgebungstemperatur ausnutzen können. Dem steht entgegen, daß die Prozeßenergie dem Kreisprozeß durch indirekte Wärmeübertragung zugeführt werden muß, was mit hohem Exergieverlust verbunden ist.

Bei offenen Kreisprozessen, wie bei Gasturbinenprozessen, erfolgt die Zuführung der Prozeßenergie durch integrierte Verbrennung direkt. Dafür haben offene Kreisprozesse den Nachteil, daß ein erheblicher Anteil der zugeführten Prozeßenergie mit dem Arbeitsmittel aus dem Kreisprozeß abgeführt wird.

Vor- und Nachteile der offenen und geschlossenen Kreisprozesse haben zur Kopplung offener und geschlossener Kreissysteme durch indirekte Wärmeübertragung geführt. Die bekanntesten Kombinationen sind die Gas-Dampf-Kraftwerke.

Ein solcher Gas-Dampf-Kraftwerksprozeß ist z.B. bekannt aus der US 4,434,613. Dabei wird fossiler Brennstoff in einer Gasturbinenbrennkammer mit Sauerstoff verbrannt, der mit Hilfe des Verdichters der Gasturbinenanlage in Mischung mit rückgeführtem Gasturbinenabgas zugeführt wird. Das Gasturbinenabgas wird vor seiner Aufbereitung zu flüssigem Kohlendioxid bzw. Rezirkulation in einem Abhitzekessel , der Wasserdampf für eine Dampfturbine erzeugt, gekühlt.

Wasser ist das am meisten verbreitete Arbeitsmittel für geschlossene Kraftprozesse. Der Nachteil dieser Kraftprozesse, die mit Wasser als Arbeitsmittel arbeiten, ist das mittlere Temperaturniveau der Zuführung der Wärme zum Prozeß, da die hohe Wärmekapazität der Verdampfung die mittlere Temperatur der Wärmezuführung stark beeinflußt und senkt. Dieser spezifische Mangel des Arbeitsmittels wird teilweise ausgeglichen, indem Prozesse gestaltet werden mit überkritischen Dampfzuständen. Das ist jedoch verbunden mit Dampfdrücken um 25,0 MPa und darüber, was die mögliche Dampftemperatur auf unter 600 °C begrenzt.

Das verbreitetste Arbeitsmittel für offene Kraftprozesse, wie sie mit Gasturbinenanlagen gestaltet werden, ist Luft. Dem Kreisprozeß wird ein Gas, also meist Luft mit Umgebungsparametern, zugeführt, das im Kreisprozeß komprimiert und danach in seiner Temperatur durch Verbrennung eines Brennstoffes mit Sauerstoffüberschuß erhöht wird. Die anschließende Expansion treibt einen Mechanismus an, der technische Arbeit leistet, den Druck und die Temperatur des Arbeitsmittels senkt, das mit mindestens Umgebungsdruck aus dem Kreisprozeß an die Umgebung abgegeben wird, wobei die Temperatur des Arbeitsmittels meist weit über der der Umgebung liegt.

Sowohl Dampfkraft- als auch Gasturbinenprozesse erreichen selbst bei modernster Prozeßgestaltung, bedingt durch ihre Arbeitsmittel, Kraftwerknettowirkungsgrade einzeln von rd. 40 % und in Kombination bis 50 %.

Die meisten Wärmekraftwerke stellen die erforderliche Prozeßwärme durch Verbrennen fossiler Brennstoffe bereit. Dabei entsteht Kohlendioxid und Wasserdampf sowie Schwefel- und Stickoxide als Schadstoffe, die durch aufwendige Rauchgasreinigungsverfahren aus den Abgasen entfernt werden müssen.

Charakteristisch für alle Kraftprozesse, die ihre Prozeßwärme durch Verbrennen fossiler Brennstoffe mit Luft bereitstellen, ist, daß der Stickstoffanteil in der Luft - als Verbrennungsgas und/oder Arbeitsmittel verwendet - den größten, den Prozeß durchlaufenden Ballastmassestrom verursacht.

Der Luftstickstoff zeichnet verantwortlich für einen erheblichen Anteil am Wärmeverlust der Kraftprozesse und an der Stickoxidbildung. Sollen feste Brennstoffe für offene Kraftwerksprozesse als Energieträger verwendet werden, dann ist es erforderlich, diese zu vergasen oder unter Druck zu verbrennen. Der Vorteil der Vergasung gegenüber der Verbrennung besteht darin, daß die zu reinigende Gasmenge wesentlich geringer ist, so daß über den Weg der Vergasung die Schadstofffracht an die Umwelt gesenkt werden kann.

Demgegenüber ist entscheidend für die Reduzierung der Kohlendioxidemission der Wirkungsgrad des Kraftprozesses und damit der spezifische Brennstoffverbrauch.

Wie US 4,434 613 und andere schlägt somit auch US 4,498,289 einen Gasturbinenprozeß vor, der als Arbeitsmittel ein kohlendioxidreiches Gasgemisch verwendet, das durch Verbrennen fossiler Brennstoffe mit technischem Sauerstoff hergestellt wird. Während bei US 4,434,613 die Abwärme des Gasturbinenabgases an einen Wasserdampfprozeß abgegeben wird, schlägt US 4,498,289 vor, den mit hoher Temperatur anfallenden Teil der Gasturbinenabwärme für die rekuperative Vorwärmung des rezirkulierten Arbeitsmittels zu verwenden, während die Niedertemperaturabwärme und die Kompressionswärme an Kühlwasser übertragen und dem Prozeß abgeführt wird. US 4,498,289 schreibt dazu vor, daß das Arbeitsmittel nach der Gasturbine und dem Kompressor nicht unter die genannte Temperatur von 31 °C gekühlt wird, und die Kompression des Arbeitsmittels nach der Gasturbine auf überkritisches Niveau erfolgt, so daß eine isothermische Kondensation des Kohlendioxids im unterkritischen Bereich sicher vermieden wird. Lediglich zum Zwecke der Separation nichtkondensierbarer Gase aus dem Kreisprozeß wird eine Unterkühlung des Arbeitsmittels auf 27 °C unter überkritischen Parametern zugelassen. Diese Festlegungen haben zur Folge, daß entsprechend dem II. Hauptsatz der Thermodynamik die unumgängliche Abführung der Anergie aus dem Kreisprozeß bei hohem mittlerem Temperaturniveau erfolgt, und das Arbeitsvermögen des Arbeitsmittels ungenügend genutzt wird. Der entscheidende Mangel der US 4,498,289 ist jedoch, daß die vorgeschlagenen Konzepte dem II. Hauptsatz der Thermodynamik zuwiderlaufen und deshalb technisch nicht realisierbar sind. Das betrifft die Temperaturdifferenzen bei der Wärmeübertragung, die inneren Wirkungsgrade der Turbomaschinen und die Druckverluste im Kreisprozeß. Insbesondere betrifft dies das in Figur 3 und 4 dargestellte Ausführungsbeispiel indem es einen Rekuperator (Position 126) integriert, der mehr Wärme abgibt als ihm zugeführt wird und das Gas mit einer Temperatur der Turbine (116) zuführt, die über der des für die Wärmeübertragung zur Verfügung stehenden Gasturbinenabgases liegt.

Aus der US 3,736,745 ist letztlich ein Kreisprozeß mit Kohlendioxid als Arbeitsmittel unter Verbrennung von Sauerstoff mit Brennstoff für eine Rekuperations-Gasturbine bekannt geworden, bei welcher das Turbinenabgas nach Kühlung im Rekuperator direkt einem Kondensator zugeführt und dort verflüssigt wird. Die Gasturbine muß daher ständig den für die Kondensation erforderlichen Druck aufrechterhalten. Daraus resultiert jedoch, daß das spezifische Arbeitsvermögen bezogen auf CO₂ niedrig ist, so daß ein sehr großer Massestrom im Kreis gefahren werden muß, was große Anlagen und eine hohe Pumpenleistung erfordert und den Wirkungsgrad senkt.

Die Aufgabe der Erfindung besteht gegenüber dem Stand der Technik daher darin, einen Kraftprozeß zu schaffen, der in seiner energetischen Effizienz vergleichbar ist mit den besten Gas-Dampf-Kraftwerksprozessen des Standes der Technik, gegenüber diesen jedoch nur 10 bis 20 % und praktisch stickoxidfreies Abgas an die Umgebung abgibt und betriebswirtschaftlich besser arbeitet.

Die Lösung dieser Aufgabe gelingt bei einem die Merkmale des Hauptanspruchs aufweisendem Verfahren, vorzugsweise Ausgestaltungsformen finden sich in den Unteransprüchen.

Dabei werden fossile gasförmige, flüssige oder feste Brennstoffe oder daraus hergestellte Brenngase bei einem Druck von vorzugsweise 8,0 MPa mit technischem Sauerstoff, z.B. aus der Luftzerlegung, im Beisein von rezirkuliertem, regenerativ vorgewärmtem Kohlendioxid in einer Brennkammer verbrannt. Mit Hilfe des rezirkulierten Kohlendioxides wird die Verbrennungstemperatur in der Brennkammer des Verbrennungsmotors oder auf die zulässige Gaseintrittstemperatur der der Brennkammer nachgeschalteten Gasturbine eingestellt und das Abgas des Motors oder der Gasturbine zur rekuperativen Vorwärmung des zu rezirkulierenden Kohlendioxides verwendet, bevor es abgekühlt bis in die Nähe der Umgebungstemperatur durch Kompression im Druck auf mindestens 7,2 MPa angehoben wird, so daß es nach erneuter Absenkung seiner Temperatur in die Nähe der Umgebungstemperatur unter Abgabe von Wärme an eine Wärmesenke, die auch der Verdampfer einer Kältemaschine sein kann, unterhalb einer Temperatur von 30 °C kondensiert. Die durch die Verbrennung des Brennstoffes in der Brennkammer gebildeten Anteile von Wasserdampf, Kohlen-, Stick- und Schwefeloxiden sowie mit dem Brennstoff und dem technischen Sauerstoff eingetragene, nicht kondensierbare Gase werden aus dem Kreisprozeß während der Kühlung des Motor- oder Gasturbinenabgases und/oder der Kondensation des rückzuführenden Kohlendioxides in gasförmiger, fester oder flüssiger Form abgeleitet. Das verflüssigte Kohlendioxid wird erfindungsgemäß mit einer Pumpe auf einen Druck von vorzugsweise 40 MPa gedrückt, in den Rekuperatoren zur Kühlung des Gasturbinenabgases im Gegenstrom verdampft und vorgewärmt, bevor es im Motor oder einer Turbine oder anderer Expansionsmaschinen, unter Abgabe von technischer Arbeit auf den Druck der Brennkammer reduziert, und dieser zugeführt wird. Für die Kompression des abgekühlten Motor- oder Gasturbinenabgases auf Kondensationsdruck und die Entspannung des verdampften und vorgewärmten Kohlendioxides, das im Kreisprozeß rezirkuliert wird, kann erfindungsgemäß ein leistungsstarker Gasturbolader, bei dem die Turbine direkt mit dem Verdichter gekoppelt ist oder einer anderen Maschine, z.B. einer Kolbenmaschine, bei der Expansion und Kompression direkt gekoppelt sind, durchgeführt werden.

Die für die Realisierung der Erfindung verwendete Vorrichtung kann aber auch eine zweistufige Gasturbine sein, die eine modifizierte Hochdruckdampfturbine, wie aus der Kraftwerkstechnik bekannt, mit einer Hochtemperaturgasturbine und einem Verdichter zur Kompression des abgekühlten Gasturbinenabgases auf Kondensationsdruck auf einer Welle direkt koppelt, wobei die energiezuführende Brennkammer zwischen Hochdruckdampf- und Gasturbine angeordnet ist.

Erfindungsgemäß ist es weiterhin, Kompressionswärme der prozeßintegrierten Verdichtung des gekühlten Gasturbinenabgases auf Kondensationsdruck an einen anderen Kreisprozeß abzuleiten, der vorzugsweise ebenfalls Kohlendioxid als Arbeitsmittel verwendet und Heizwärme oder technische Arbeit abgibt.

Der Nutzeffekt der Erfindung besteht darin, daß Abwärme der Expansion in Verbrennungsmotoren oder Gasturbinen in den Kreisprozeß rückgeführt und für die thermische Kompression des Arbeitsmittels verwendet wird, was den Anteil der mechanischen Kompressionsarbeit im Kreisprozeß senkt und eine höhere spezifische Leistung der Maschinen zur Folge hat, bei gleichzeitiger Reduzierung des Abgasvolumens sowie des Stickoxidausstoßes um bis zu 90 % gegenüber dem Stand der Technik.

### Ausführungsbeispiel 1

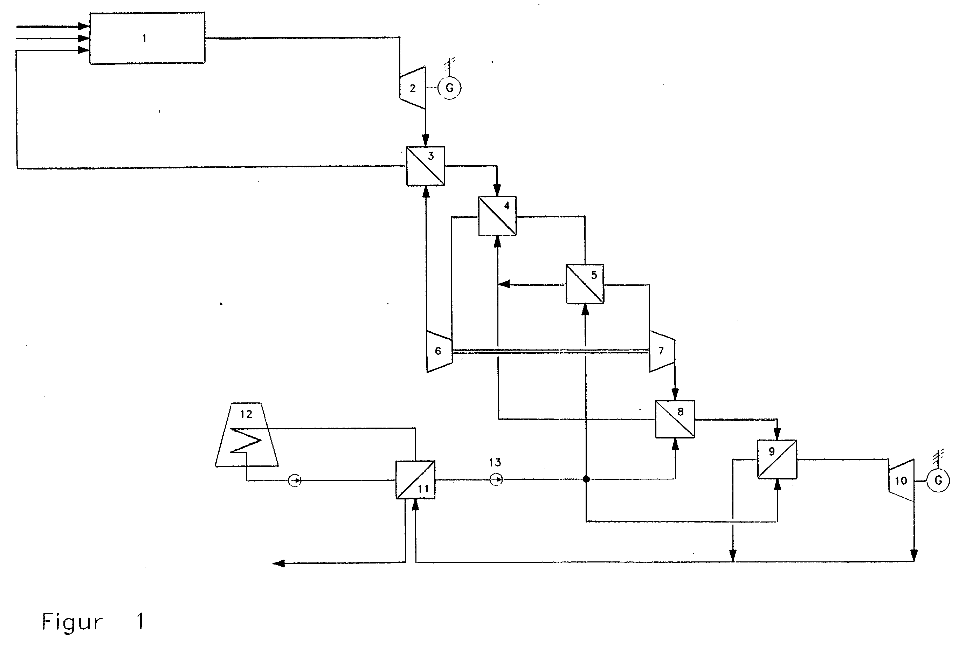

Die Erfindung wird mit Hilfe des in Figur 1 dargestellten technologischen Grobschemas einer Gasturbinenanlage beschrieben. Einem Brennraum (1), der praktisch eine Gasturbinenbrennkammer sein kann, wird Brennstoff, der im Beispiel zu 100 % aus Methan bestehen soll, unter einem Druck von 8,0 MPa mit technischem Sauerstoff, der einen Sauerstoffanteil von mindestens 93 Vol.% hat, verbrannt.

Durch Zuspeisung von vorgewärmtem Kohlendioxid wird die Temperatur der Verbrennung im Brennraum (1) reduziert, so daß aus der Verbrennung ein 1200° C heißes Arbeitsmittel an den Expansionsprozeß (2), im Beispiel eine Gasturbine, abgegeben wird.

Je kg verbranntes Methan werden der Verbrennung im Brennraum (1) 4,3 kg technischer Sauerstoff und 70 kg Kohlendioxid, das auf 755 °C regenerativ vorgewärmt wurde, zugeführt.

Das 1200 °C heiße Verbrennungsgas expandiert in der Gasturbine (2) auf 1,5 MPa. Eine Gasturbine kann auf diese Art bei einer Abgastemperatur von ca. 920 °C rd. 27,35 MJ technische Arbeit je kg Methan abgeben. Das Abgas überträgt in einem ersten Rekuperator (3) einen Teil seiner Enthalpie im Gegenstrom an Kreislaufgas, erfindungsgemäß Kohlendioxid, bevor dieses mit einer Temperatur von ca. 755 °C in die Brennkammer (1) geleitet wird. Das Kreislaufgas wird in einem zweiten Rekuperator (11) durch Kondensation von Kohlendioxid bei einem Druck von 7,2 MPa aus auf Umgebungstemperatur gekühltem Abgas in flüssiger Form gewonnen. Die dabei freiwerdende Wärme wird über die Wärmesenke (12) an die Umgebung abgeführt.

Aus dem Rekuperator (11) werden gleichzeitig gasförmiges Kohlendioxid und nicht kondensierbare Bestandteile in dem Umfange an die Umgebung abgeführt, wie sie der Brennkammer (1) mit dem Brennstoff und dem technischen Sauerstoff zugeführt wurden.

Das Kreislaufgas, im Beispiel flüssiges Kohlendioxid, wird mit einer Pumpe (13) im Druck auf 33,0 MPa erhöht und den Rekuperatoren (8 und 4) unter überkritischen Parametern verdampft und auf 510 °C überhitzt, bevor es in der Turbine (6), z.B. eines Gasturboladers, auf ca. 360 °C unter Abgabe von technischer Arbeit auf annähernd den Betriebsdruck der Brennkammer (1) von 8,0 MPa entspannt wird.

Bei Verwendung eines Gasturboladers treibt die Turbine (6) den Verdichter (7) des gleichen Turboladers direkt an, mit dem das in den Rekuperatoren (3, 4 und 5) gekühlte Abgas im Druck so erhöht wird, daß unter Beachtung der Druckverluste der erneuten Kühlung in den Rekuperatoren (8 und 9) die erforderliche Kondensation des Kohlendioxides im Rekuperator (11) stattfinden kann.

Während der Abkühlung des Abgases in den Rekuperatoren (8 und 9) taut das bei der Verbrennung des Brennstoffes in der Brennkammer (1) entstandene Wasser aus. Es wird über Kondensatableiter an die Umgebung abgegeben.

Die im Rekuperator (9) abzuführende Wärme kann insgesamt als Heizwärme an einen Verbraucher oder einen Niedertemperaturkreisprozeß, der mit Hilfe des Rekuperators (11) und einer Turbine (10) weitere technische Arbeit leistet, abgegeben werden.

Der im Beispiel beschriebene, erfindungsgemäße Kraftprozeß erreicht ein Ausbringen von technischer Arbeit, bezogen auf Methan von 62,3 % brutto. Unter Beachtung des Standes der Technik bei den Luftzerlegungsanlagen ist es möglich, ein Kraftwerk mit einem Nettowirkunsgrad von 50 % zu errichten.

### Ausführungsbeispiel 2

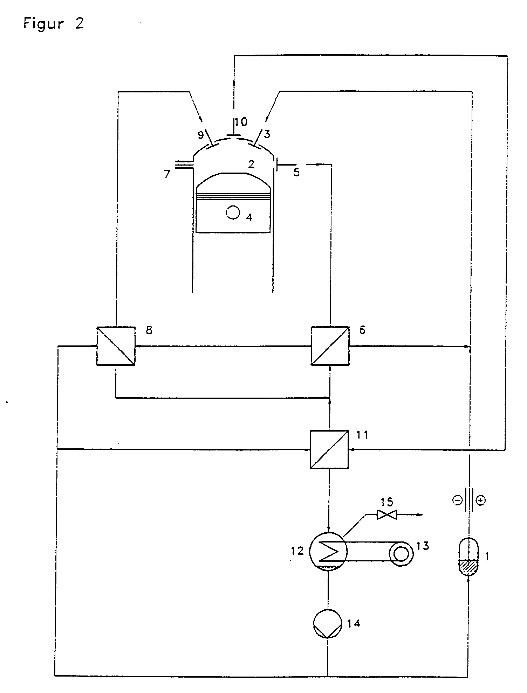

Die Anwendung der Erfindung wird am Beispiel eines 4-Takt-Verbrennungsmotors mit Hilfe von Figur 2 beschrieben.

Die Überführung des Verfahrens in einem zyklischen Betriebszustand erfolgt mit Hilfe eines Anfahrsystems (1), das flüssiges Kohlendioxid bei Drücken zwischen 20 und 40 MPa speichert und nach Entnahme durch indirekte Wärmezuführung verdampft und auf 300 bis 600 °C überhitzt.

Das dem Anfahrsystem entnommene Kohlendioxid wird dem Arbeitszylinder (2) des Verbrennungsmotors über das 1. Einlaßventil (3) bei Stellung des Kolbens (4) in der Nähe seines oberen Totpunktes zugeführt, und der Arbeitszylinder (2) aufgeladen, womit der 1. Arbeitstakt des Kreisprozesses beginnt. Im zyklisch-stationären Betrieb erfolgt die Aufladung durch Zuführung von Kohlendioxid mit z.B. 30 MPa und 550 °C aus dem 1. Rekuperator (6).

Das über das 1. Einlaßventil (3) zugeführte Kohlendioxid expandiert unter Abgabe von technischer Arbeit an den Kolben (4) im Arbeitszylinder (2) auf 2,0 bis 3,0 MPa. Bei diesem Druckniveau wird Motorbrennstoff bekannter Art und technischer Sauerstoff über Einspritzdüsen (7) in den Arbeitszylinder (2) injiziert und dort aufgrund von Eigen- oder Fremdzündung verbrannt. Das unter Druck- und Temperaturanstieg im Arbeitszylinder (2) entstehende Verbrennungsgas wird ebenfalls unter Abgabe technischer Arbeit an den Kolben (4) auf 0,3 bis 1,0 MPa entspannt. Dieses Druckniveau wird erreicht am Ende des 1. Arbeitstaktes bei Stellung des Kolbens (4) in der Nähe seines unteren Totpunktes.

Im 2. Arbeitstakt bewegt sich der Kolben (4) vom unteren zum oberen Totpunkt und drückt das expandierte Verbrennungsgas mit 500 bis 700 °C bei 0,3 bis 1,0 MPa aus dem Arbeitszylinder (2) über das 1. Auslaßventil (5), den 1. Rekuperator (6) und den 2. Rekuperator (8) zurück zum 2. Einlaßventil (9).

In den Rekuperatoren (6) und (8) wird das Verbrennungsgas auf 40 bis 50 °C gekühlt.

Im 3. Arbeitstakt saugt der Kolben (4) das gekühlte Verbrennungsgas über das 2. Einlaßventil (9) in den Arbeitszylinder (2), indem er sich wieder vom oberen zum unteren Totpunkt bewegt. Bei Stellung des Kolbens (4) in der Nähe des unteren Totpunktes schließt das 2. Einlaßventil (9) und beendet den 3. Arbeitstakt.

Im 4. Arbeitstakt wird das angesaugte Verbrennungsgas im Arbeitszylinder (2) bei geschlossenen Einlaßventilen (3) und (9) und Auslaßventilen (5) und (10) komprimiert, indem der Kolben (4) vom unteren zum oberen Totpunkt läuft. Bei einem Druck von 60 bis 80 bar, der für die Kohlendioxidkondensation bei üblicher Umgebungstemperatur erforderlich ist, öffnet das 2. Auslaßventil (10), und der Kolben (4) fördert das komprimierte Verbrennungsgas zum 3. Rekuperator (11), in dem das Verbrennungsgas im Gegenstrom zu flüssigem Kohlendioxid aus dem Kondensator (12) auf 40 bis 50 °C gekühlt wird, bevor im Kondensator (12) durch Wärmeabgabe an eine Wärmesenke (13) mindestens so viel Kohlendioxid aus dem Verbrennungsgas ausgetaut wird, wie für die Rezirkulation erforderlich.

Am Ende des 4. Arbeitstaktes befindet sich der Kolben (4) am oberen Totpunkt, und das 2. Auslaßventil (10) schließt sich, und der Zyklus beginnt von neuem.

Der für den Beginn des 1. Arbeitstaktes erforderliche Druck des Kohlendioxides, z.B. 30 MPa, wird gesichert durch die Kondensatpumpe (14).

Die mit dem Brennstoff und dem technischen Sauerstoff dem Kreisprozeß zugeführten Stoffe werden aus dem Kondensator (12) über ein Ventil (15) aus dem Kreisprozeß abgeführt.

## Patentansprüche

1. Verfahren zur schadstoffarmen Umwandlung von fossilen Brennstoffen in technische Arbeit mit Hilfe von Expansionsmaschinen (2), wobei man den fossilen Brennstoff in Gegenwart von technischem Sauerstoff und rückgeführtem Kohlendioxid verbrennt, unter Abgabe von technischer Arbeit in der Expansionsmaschine entspannt, das die Expansionsmaschine (2) verlassende expandierte Abgas in einem Wärmetauscher kühlt und nach einer Druckerhöhung in weiteren Wärmetauschern unter 30°C kühlt und verflüssigt, nicht kondensierbare Anteile ausschleust, flüssiges CO₂ in der durch die Verbrennung entstehenden Menge abzieht und den Rest als Kreislaufgas der Verbrennung wieder zuführt, wobei man diesen Anteil durch Wärmetausch mit dem Abgas aus der Verbrennung verdampft und mit dem verdampften CO₂ die Verbrennung auf 800 bis 1500°C kühlt.

2. Verfahren nach Anspruch 1, **dadurch gekennzeichnet**, daß man die Verdampfung bei überkritischem Druck vorzugsweise von etwa 40 MPa durchführt.

3. Verfahren nach Anspruch 1 oder 2, **dadurch gekennzeichnet**, daß man gleichzeitig die Expansion des Kreislaufgases auf Verbrennungsdruck und die Kompression des abgekühlten Gases auf Kondensationsdruck mit Hilfe eines Turboladers durchführt.

4. Verfahren nach Anspruch 3, **dadurch gekennzeichnet**, daß man das heiße Verbrennungsgas einer Gasturbine zuführt und das Abgas vor der Verdichtung mit Hilfe des Turboladers in mehreren Rekuperatoren stufenweise gegen das rückgeführte Kreislaufgas kühlt.

5. Verfahren nach einem der Ansprüche 1 oder 2, **dadurch gekennzeichnet**, daß man die Verbrennung des fossilen Brennstoffs in einem 4-Takt-Kolbenmotor durchführt, wobei man bei oberer Totpunktstellung des Kolbens
- im ersten Arbeitstakt rückgeführtes Kreislaufgas einspeist und unter Abgabe technischer Arbeit an einen Kolben expandiert, sodann Brennstoff und technischen Sauerstoff einspritzt, zündet und unter Abgabe technischer Arbeit weiter entspannt,
- im 2. Arbeitstakt das expandierte Verbrennungsgas durch den aufsteigenden Kolben aus dem Zylinder ausstößt,
- im dritten Arbeitstakt durch die Abwärtsbewegung des Kolbens gekühltes Verbrennungsgas ansaugt,
- um es im vierten Arbeitstakt auf Kondensatordruck zu komprimieren und auszustoßen und es danach im Gegenstrom zu flüssigem CO₂ kühlt und durch externe Wärmeabführung kondensiert.

## Claims

1. Process for the low-pollutant conversion of fossil fuels into mechanical power with the aid of expansion engines (2), the fossil fuel being burned in the presence of technical oxygen and recycled carbon dioxide and being expanded in the expansion engine to produce mechanical power, the expanded exhaust gas leaving the expansion engine (2) being cooled in a heat exchanger and, after an increase in pressure, being cooled in further heat exchangers to below 30°C and being liquified, non-condensible fractions being purged, liquid CO₂ in the quantity formed by the combustion being taken off and the remainder being recycled to the combustion as circulating gas, this fraction being vaporized by heat exchange with the exhaust gas from the combustion and the combustion being cooled to 800 to 1500°C by the vaporized CO₂.

2. Process according to claim 1, characterized in that the vaporization is carried out at a supercritical pressure of preferably about 40 MPa.

3. Process according to claim 1 or 2, characterized in that the expansion of the circulating gas to the combustion pressure and the compression of the cooled gas to the condensation pressure is carried out with the aid of a turbocharger.

4. Process according to claim 3, characterized in that the hot combustion gas is fed to a gas turbine and the exhaust gas is, before the compression by means of the turbocharger, cooled stepwise in a plurality of recuperators against the recycled circulating gas.

5. Process according to one of claims 1 or 2, characterized in that the combustion of the fossil fuel is carried out in a 4-stroke reciprocating engine, wherein, with the piston in the top dead center position,
- in the first working stroke, recycled circulating gas is fed in and expanded with production of mechanical power to a piston, fuel and technical oxygen are then injected, ignited and further expanded with production of mechanical power,
- in the 2nd working stroke, the expanded combustion gas is ejected from the cylinder by the rising piston,
- in the third working stroke, cooled combustion gas is aspirated by the downward motion of the piston,
- and finally, in the fourth working stroke, it is compressed to the condenser pressure and ejected and subsequently cooled in countercurrent to liquid CO₂ and condensed by external heat removal.

## Revendications

1. Procédé pour la transformation faiblement polluante de combustibles fossiles en énergie motrice à l'aide de machines à expansion (2), selon lequel on brûle le combustible fossile en présence d'oxygène technique et de gaz carbonique recyclé, on le détend dans la machine à expansion en fournissant de l'énergie motrice, on refroidit le gaz d'échappement dilaté sortant de la machine à expansion (2) dans un échangeur de chaleur et, après avoir augmenté la pression, on le refroidit dans d'autres échangeurs de chaleur à moins de 30°C et on le liquéfie, on élimine les fractions non condensables, on extrait du CO₂ liquide du volume obtenu par la combustion et on réinjecte le reste comme gaz de recyclage dans la combustion, cette fraction étant vaporisée par échange de chaleur avec le gaz d'échappement libéré par la combustion et la combustion étant refroidie avec le CO₂ vaporisé à une température comprise entre 800 et 1500°C.

2. Procédé selon la revendication 1, caractérisé en ce qu'on effectue la vaporisation de préférence à une pression surcritique de l'ordre de 40 MPa.

3. Procédé selon la revendication 1 ou 2, caractérisé en ce qu'on effectue simultanément la dilatation du gaz de recyclage à la pression de combustion et la compression du gaz refroidi à la pression de condensation à l'aide d'un turbocompresseur d'alimentation.

4. Procédé selon la revendication 3, caractérisé en ce qu'on transporte le gaz de combustion chaud dans une turbine à gaz et on refroidit le gaz d'échappement par étapes contre le gaz de recyclage dans plusieurs récupérateurs avant la compression à l'aide du turbocompresseur d'alimentation.

5. Procédé selon l'une des revendications 1 et 2, caractérisé en ce qu'on brûle le combustible fossile dans un moteur à piston à quatre temps, et, lorsque le piston se trouve au point mort supérieur,
- dans le premier cycle de travail, on introduit du gaz de recyclage qui se dilate en fournissant de l'énergie motrice à un piston, on injecte ensuite combustible et oxygène technique, on enflamme et on continue à détendre en fournissant de l'énergie motrice,
- dans le deuxième cycle de travail, on expulse le gaz de combustion dilaté du cylindre, grâce au piston qui monte,
- dans le troisième cycle de travail, on aspire le gaz de combustion refroidi, grâce au piston qui descend,
- et enfin, dans le quatrième cycle de travail, on le comprime à la pression de condensation et l'expulse, et on le refroidit ensuite à contrecourant en CO₂ liquide et le condense par dissipation de chaleur externe.
